# FASCICULE DE BREVET EUROPEEN

(11) **EP 1 310 716 B1**
(45) Date de publication et mention de la délivrance du brevet: **26.07.2006**
(21) Numéro de dépôt: 02447210.2
(22) Date de dépôt: 07.11.2002
(51) Int. Cl.: F16K 24/04

(54) **Desaerateur**
Entlüftungsvorrichtung
Deaerator

(30) Priorité: 09.11.2001 EP 01870240
(43) Date de publication de la demande: 14.05.2003
(73) Titulaire: Techspace Aero S.A., 4041 Herstal (BE)
(72) Inventeur: Palladino, Massimo, 4450 Juprelle (BE)
(74) Mandataire: Van Malderen, Joëlle

(56) Documents cités:
- US-A- 3 695 010
- US-A- 5 019 141
- US-A- 5 365 970

## Description

### Objet de l'invention

La présente invention se rapporte à un nouveau type de clapet plus particulièrement destiné à un désaérateur intervenant dans la vidange d'un réservoir vers un autre réservoir.

### Arrière-plan technologique

Les désaérateurs sont des dispositifs bien connus qui permettent de séparer les mélanges gaz-liquide et plus particulièrement air-huile dans toute une série d'applications, en particulier dans le cas d'huile de lubrification récoltée par des pompes de récupération. Le but est bien entendu de fournir à nouveau une huile sinon pure, propre et exempte de bulles d'air, qui puisse être de ce fait réutilisée.

D'autres types d'applications sont les circuits hydrauliques de commande de divers dispositifs comme par exemple les circuits hydrauliques de bâches utilisés en particulier dans les appareils tels que l'Airbus A340.

Dans de telles applications, il est nécessaire de pouvoir vidanger un réservoir vers un autre réservoir. Toutefois, à partir du moment où le premier réservoir est vidé, on risque d'introduire de l'air dans le second réservoir, ce qui est dans certains cas particulièrement catastrophique et doit être évité à tout prix.

Dans ce but, on dispose entre les deux réservoirs des dispositifs désaérateurs éventuellement munis de clapets spécifiques. De tels dispositifs désaérateurs sont constitués d'une cavité essentiellement cylindrique à l'intérieur de laquelle le mélange huile-air est introduit tangentiellement de manière à induire à l'intérieur de ladite cavité un mouvement de rotation grâce auquel l'huile s'accumule le long des parois dans la partie la plus basse tandis que l'air demeure au centre dans la partie la plus haute. Un orifice de sortie d'air est aménagé au centre du dispositif de manière à pouvoir récolter l'air accumulé dans la partie centrale tandis que l'huile est habituellement évacuée par des orifices situés dans le bas de la paroi.

Dans le cas particulier des applications précédemment citées où l'on souhaite effectuer la vidange d'un réservoir vers un autre, il est nécessaire d'empêcher toute intrusion d'air dans le deuxième réservoir.

Le document US-A-5 565 970 décrit un dispositif de contrôle d'irrigation permettant d'étancher un liquide comprenant une valve d'irrigation disposée dans un canal d'irrigation et dont le système d'ouverture/fermeture dépend du niveau de liquide par rapport au siège de ladite valve. Lorsque ce niveau de liquide est situé au dessus du siège de la valve, la bille flotte à la surface du liquide et la valve est ouverte. Lorsque ce niveau de liquide est situé en dessous du siège de la valve, la bille obstrue le siège de la valve et la valve est ainsi fermée. Cette valve présente plusieurs inconvénients : c'est une valve « one shot » c'est-à-dire qu'après s'être fermée une fois en absence de liquide, elle reste fermée même si le niveau de liquide remonte au dessus du siège de la valve. En outre, elle est conçue pour contrôler spécifiquement le transfert de liquides et de ce fait ne convient pas pour étancher de l'air. Enfin, elle n'est pas adaptée pour fonctionner en présence d'un débit de liquide important, la bille étant capable de rester sur son siège lorsque le liquide revient au dessus du siège de la valve.

### Buts de l'invention

La présente invention vise à proposer un dispositif qui permette de résoudre les problèmes de l'état de la technique et en particulier qui permette d'éviter l'introduction d'air dans un réservoir dans lequel on vidange à partir d'un autre réservoir.

La présente invention vise en outre à permettre une solution qui puisse garantir une étanchéité à l'air tout en permettant un écoulement rapide et même très rapide du liquide, par exemple en cas de rupture de canalisation hydraulique.

La présente invention vise de plus à proposer un concept particulièrement simple et facile à implémenter dans tout type d'équipement hydraulique.

### Principaux éléments caractéristiques de l'invention

La présente invention se rapporte à un clapet pour la vidange rapide d'un premier réservoir vers un deuxième réservoir, en particulier destiné à être monté sur un désaérateur situé entre les deux réservoir selon le préambule de la revendication 1. L'invention est caractérisée en ce que la bille présente une densité inférieure d'au moins un tiers à celle du liquide.

Ledit liquide peut être par exemple de l'huile, de l'eau ou tout autre liquide équivalent.

De préférence, la densité de ladite bille est proche de la moitié de celle du liquide.

Le choix de la densité de la bille est de préférence adapté à la fonction du clapet, qui est de préférence ici d'étancher de l'air.

En outre, de préférence, ledit clapet est capable d'adopter une position ouverte et une position fermée en fonction du débit de liquide à l'intérieur du clapet.

La position ouverte correspond à une position dans laquelle le niveau de liquide qui entre dans la ou les ouvertures du clapet est situé au dessus du fond ou siège du clapet et la bille flotte à la surface du liquide.

La position fermée correspond à une position dans laquelle le niveau de liquide qui entre dans la ou les ouvertures du clapet est situé en dessous du fond ou siège du clapet et la bille obture le fond ou siège du clapet, et donc l'accès au désaérateur.

Avantageusement, les dimensions de la bille sont telles qu'elle se déplace librement à l'intérieur du clapet mais ne peut en sortir.

Selon une première forme d'exécution, la bille est réalisée en un matériau tel que de l'acier inoxydable permettant de résister à des liquides agressifs.

Selon une autre forme d'exécution, la bille est réalisée en un matériau plastique ou autre pour l'utilisation avec des liquides non agressifs.

Selon une forme d'exécution préférée, la bille est creuse.

La présente invention se rapporte également à un désaérateur muni d'un clapet selon l'invention.

### Brève description des figures

Les figures 1, 2 et 3 décrivent le principe de la vidange d'un premier réservoir vers un second réservoir par l'intermédiaire d'un désaérateur muni d'un clapet selon l'invention.

La figure 4 représente une vue en détail du clapet du désaérateur représenté aux figures 1 à 3.

### Description de plusieurs formes d'exécution préférées de l'invention

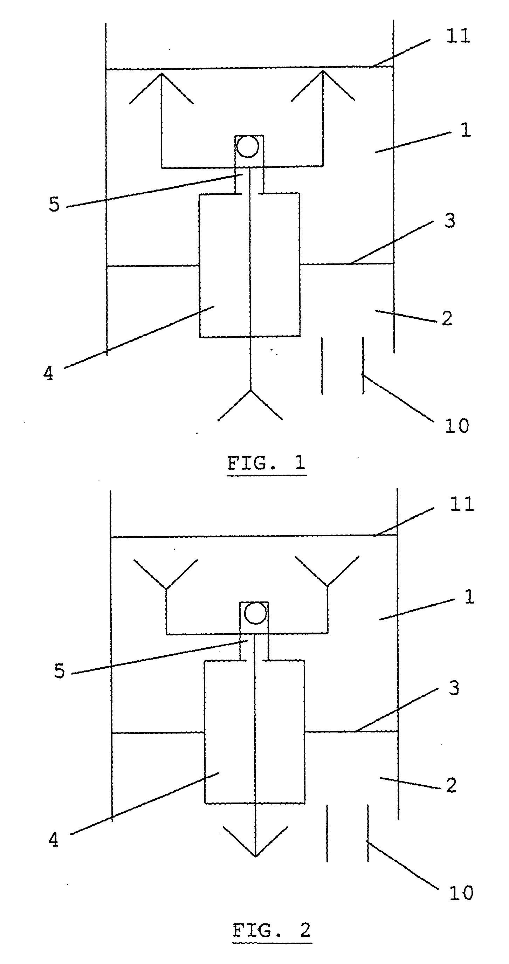

Les figures 1 à 3 décrivent des conditions d'utilisation d'un désaérateur muni d'un clapet selon l'invention. Un désaérateur muni d'un tel clapet peut être utilisé, selon un type d'application préféré, pour la vidange d'un premier réservoir 1 vers un second réservoir 2, les deux réservoirs étant séparés par des baffles 3.

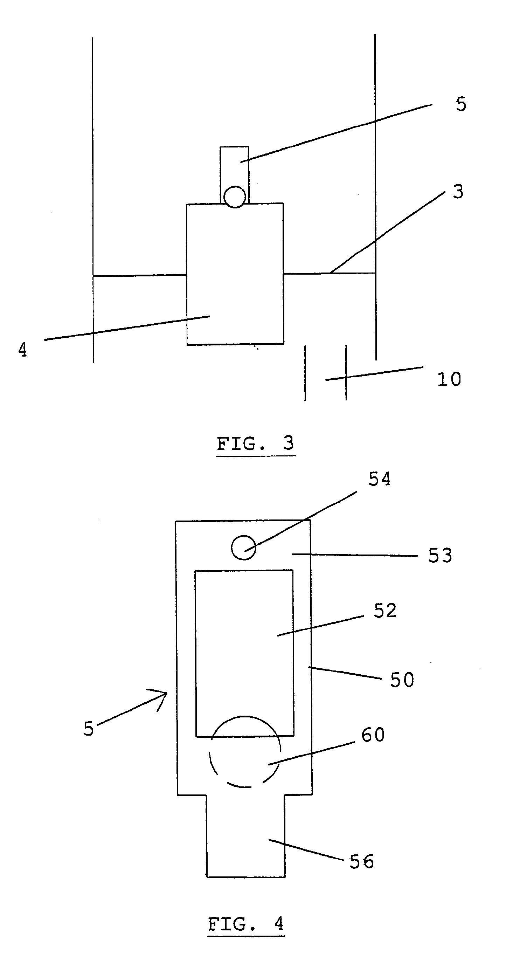

Le transfert du liquide présent dans le réservoir 1 vers le réservoir 2 doit se faire par l'intermédiaire d'un dispositif désaérateur 4 muni d'un clapet d'admission 5. Ce clapet est décrit plus en détail à la figure 4.

La figure 1 illustre le fonctionnement du clapet lors d'une vidange à vitesse relativement lente du réservoir 1 vers le réservoir 2.

Le clapet est réalisé de sorte que le liquide entre dans celui-ci et parvienne par l'intermédiaire du fond ou siège du clapet 56 vers l'entrée du désaérateur.

De manière classique, le désaérateur permet de séparer le mélange liquide - gaz, par exemple huile - air, essentiellement en induisant une rotation à l'intérieur dudit désaérateur de sorte que le liquide, et en particulier l'huile, s'accumule le long des parois dans la partie inférieure tandis que l'air demeurera au centre et pourra s'échapper par le même clapet. Dans ce but, le clapet sert de vanne de purge.

Le liquide est ensuite aspiré par une porte d'aspiration 10 située dans la partie inférieure du réservoir 2.

La figure 2 illustre le fonctionnement du clapet dans le cas d'une vidange anormalement rapide du réservoir 1 vers le réservoir 2. Cette situation peut se présenter en cas d'accident, comme par exemple une rupture de canalisation en aval du réservoir 2.

Le clapet 5 du désaérateur 4 laisse passer le liquide vers l'entrée du dispositif désaérateur 4 et ensuite vers la porte d'aspiration 10 tout en autorisant également le passage de l'air vers la surface libre représentée par le niveau 11 dans le premier réservoir. En effet, même dans le cas d'une vidange rapide, la bille présente dans le désaérateur reste en position élevée et n'obture pas la sortie du clapet.

La figure 3 illustre le fonctionnement du clapet dans le cas d'une vidange rapide du réservoir 1 vers le réservoir 2, alors que le niveau de liquide est inférieur au niveau d'entrée du désaérateur.

La bille du clapet flottant sur le liquide va alors se repositionner en position inférieure et fermer ainsi ledit clapet. Ceci évite l'entraînement d'air lors de la vidange du réservoir 1 vers le réservoir 2.

La figure 4 représente en détail le clapet du désaérateur utilisé dans l'invention. Ce clapet se présente essentiellement sous la forme d'un cylindre ou d'un parallélépipède 50 perforé d'une ou plusieurs ouvertures latérales 52 qui permettent le passage du liquide du réservoir 1 à vidanger vers le réservoir 2. La partie supérieure dudit cylindre ou parallélépipède 50 est obturée par un bouchon 53 parfaitement étanche.

Afin de favoriser encore le dégazage et donc l'évacuation de poches d'air emprisonné dans ledit bouchon, il est prévu de petits orifices 54 dans ce dit bouchon.

Le siège 56 du clapet est directement fixé sur le dispositif désaérateur et est à cet effet muni de moyens appropriés tels qu'un pas de vis qui permettra de fixer le clapet sur ledit désaérateur.

Enfin, selon une caractéristique particulièrement importante, le clapet est muni d'une bille 60 qui est apte à flotter sur le liquide entrant par ses diverses ouvertures. Les dimensions de cette bille sont telles que la bille doit pouvoir se déplacer librement à l'intérieur du clapet avec le niveau du liquide, ne pas pouvoir sortir du clapet et pouvoir obturer parfaitement l'entrée du dispositif désaérateur se présentant sous forme d'une ouverture circulaire.

De manière particulièrement avantageuse, cette bille sera réalisée dans un matériau léger et pouvant résister à des liquides agressifs tels que de l'acier inoxydable ou inox. Selon cette forme d'exécution, elle peut être tout simplement réalisée en accolant ou solidarisant deux demi-coques en acier inoxydable ou inox que l'on polira ensuite.

Selon une autre forme d'exécution, cette bille peut être réalisée en un matériau plastique suffisamment résistant au liquide utilisé.

On définit pour le clapet une position ouverte et une position fermée, comme mentionné ci-dessus. Le fonctionnement du clapet est tel que lorsqu'il existe un débit de liquide, le clapet est en position ouverte et la bille flotte à la surface du liquide, tandis que lorsqu'il n'existe pas de débit de liquide, et donc seulement un débit d'air, le clapet est fermé et la bille scelle le siège 56 du clapet. De cette façon, le clapet selon l'invention permet d'étancher de l'air.

En outre, dans le cas présent, le clapet ayant pour fonction d'étancher de l'air, de préférence la forme de la bille du clapet est elle aussi adaptée à cette fonction et la tolérance de forme associée à ladite bille est très faible de façon à s'adapter parfaitement à la forme du siège du clapet et assurer ainsi une étanchéité maximale.

De plus, la bille a une forme telle qu'elle peut être utilisée quelles que soient les conditions de débit de liquide, c'est-à-dire que celui-ci soit faible, normal ou important. Dans le cas d'un débit de liquide important, la bille est conçue pour résister à la force de traînée importante exercée sur elle par le liquide.

La présence du bouchon 53 permet de réduire la traînée de liquide sur la bille lors de la vidange, ce qui ne serait pas le cas avec un autre dispositif, telle qu'une grille par exemple.

## Revendications

1. Clapet (5) pour la vidange rapide d'un liquide d'un premier réservoir vers un deuxième réservoir, destiné à être monté sur un désaérateur (4) situé entre les deux réservoirs, se présentant essentiellement sous la forme d'un cylindre, perforé d'une ou plusieurs ouvertures latérales (52) permettant le passage dudit liquide, dont la partie supérieure est obturée par un bouchon (53), de préférence parfaitement étanche, sur ou dans lequel sont disposés des orifices (54) destinés à l'aération, muni d'un siège (56) servant d'entrée vers le désaérateur (4) et d'une bille (60) apte à se déplacer à l'intérieur du cylindre et conçue pour ouvrir ou fermer ledit clapet en fonction du niveau de liquide par rapport audit siège (56), **caractérisé en ce que** ladite bille (60) présente une densité inférieure d'au moins un tiers à celle du liquide.

2. Clapet selon la revendication 1, **caractérisé en ce que** la bille (60) présente une densité égale à environ la moitié de la densité du liquide.

3. Clapet selon la revendication 1 ou 2, **caractérisé en ce que** les dimensions de la bille sont telles qu'elle peut se déplacer librement à l'intérieur du clapet mais ne peut en sortir.

4. Clapet selon l'une quelconque des revendications précédentes, **caractérisé en ce que** la bille est réalisée en un matériau tel que l'inox permettant de résister à des fluides agressifs.

5. Clapet selon l'une quelconque des revendications précédentes, **caractérisé en ce que** la bille est creuse.

6. Clapet selon la revendication 1, **caractérisé en ce que** le liquide utilisé est de l'huile et ladite bille (60) présente une densité inférieure d'au moins un tiers à celle de l'huile.

7. Désaérateur muni d'un clapet selon l'une quelconque des revendications précédentes.

8. Désaérateur selon la revendication 6, **caractérisé en ce qu'**il réalise une séparation d'un mélange liquide/air, de préférence huile/air, par un mouvement de rotation du mélange introduit tangentiellement.

## Claims

1. Valve (5) for the rapid draining of a liquid from a first tank into a second tank, intended to be mounted on a deaerator (4) located between both tanks, essentially in the form of a cylinder, perforated by one or several lateral apertures (52) allowing the passage of said liquid, whose upper portion is obstructed by a plug (53), preferably perfectly sealed, on or inside which are located orifices (54) intended for aeration, provided with a seat (56) acting as the intake of the deaerator (4) and with a ball (60) able to move inside the cylinder and designed to open or close said valve depending on the level of liquid relative to said seat (56), **characterised in that** said ball (60) has a density that is lower by at least one third than that of the liquid.

2. Valve according to Claim 1, **characterised in that** the ball (60) has a density equal to about half the density of the liquid.

3. Valve according to Claim 1 or 2, **characterised in that** the dimensions of the ball are such that it can freely move inside the valve but cannot come out of it.

4. Valve according to any one ,of the preceding claims, **characterised in that** the ball is made of a material such as stainless steel allowing to resist corrosive fluids.

5. Valve according to any one of the preceding claims, **characterised in that** the ball is hollow.

6. Valve according to Claim 1, **characterised in that** the liquid used is oil and said ball (60) has a density that is lower by at least one third than that of the oil.

7. Deaerator provided with a valve according to any one of the preceding claims.

8. Deaerator according to Claim 7, **characterised in that** it separates a liquid/air mixture, preferably an oil/air mixture, by a rotary motion of the mixture introduced tangentially.

## Patentansprüche

1. Sperrventil (5) für das schnelle Entleeren einer Flüssigkeit aus einem ersten in einen zweiten Behälter, das für eine Montage auf einer Entlüftungseinrichtung (4) vorgesehen ist, die sich zwischen den beiden Behältern befindet und im Wesentlichen in Form eines mit einer oder mehreren seitlichen Öffnungen (52) versehenen Zylinders vorliegt; hierdurch wird der Durchgang besagter Flüssigkeit ermöglicht. Der obere Teil des Zylinders wird durch einen Stopfen (53) gesperrt, der vorzugsweise vollständig dicht ist, auf bzw. in dem die der Entlüftung dienenden Öffnungen (54) angeordnet sind. Er ist mit einem Sitz (56) als Eingang zur Entlüftungseinrichtung (4) sowie mit einer Kugel (60) ausgestattet, die in der Lage ist, sich innerhalb des Zylinders zu verschieben. Sie ist so konzipiert, dass sie besagtes Sperrventil in Abhängigkeit des Flüssigkeitsniveaus gegenüber dem besagten Sitz (56) öffnen und schließen kann und **dadurch gekennzeichnet ist, dass** besagte Kugel (60) über eine Dichte verfügt, die mindestens um ein Drittel geringer als die der Flüssigkeit ist.

2. Sperrventil gemäß Anspruch 1, **dadurch gekennzeichnet, dass** die Kugel (60) über eine Dichte verfügt, die ungefähr gleich der Hälfte der Dichte der Flüssigkeit ist.

3. Sperrventil gemäß Anspruch 1 oder 2, **dadurch gekennzeichnet, dass** die Abmessungen der Kugel so ausgelegt sind, dass sie sich frei im Inneren des Sperrventils bewegen, jedoch nicht aus ihm heraustreten kann.

4. Sperrventil gemäß einem der vorherigen Ansprüche, **dadurch gekennzeichnet, dass** die Kugel aus einem Material wie z.B. rostfreiem Stahl gefertigt ist, das gegen aggressive Flüssigkeiten beständig ist.

5. Sperrventil gemäß einem der vorherigen Ansprüche, **dadurch gekennzeichnet, dass** die Kugel hohl ist.

6. Sperrventil gemäß Anspruch 1, **dadurch gekennzeichnet, dass** es sich bei der verwendeten Flüssigkeit um Öl handelt und dass die besagte Kugel (60) über eine Dichte verfügt, die mindestens um ein Drittel geringer als die des Öls ist.

7. Mit einem Sperrventil ausgestattete Entlüftungseinrichtung gemäß einem der vorherigen Ansprüche.

8. Entlüftungseinrichtung gemäß Anspruch 6, **dadurch gekennzeichnet, dass** hierdurch eine Trennung eines Luft-Flüssigkeitsgemisches, vorzugsweise Öl-Luftgemisch, durch eine Rotationsbewegung des Gemisches erzielt wird, das tangential zugeführt wird.
